# EUROPEAN PATENT APPLICATION

(11) **EP 4 822 456 A1**
(43) Date of publication of application: **14.10.2026**
(21) Application number: 25169268.7
(22) Date of filing: 08.04.2025
(51) Int. Cl.: G05B 15/02, G05D 3/00, G06N 3/08, G06N 3/09, G06N 20/00, G05B 19/19

(54) **DEVICE AND METHOD FOR LEARNING DYNAMICS OF A TECHNICAL SYSTEM**

(71) Applicant: Robert Bosch GmbH, 70442 Stuttgart (DE)
(72) Inventor: Testa, Andrea, 71263 Weil Der Stadt (DE); Rozo, Leonel, 71032 Boeblingen (DE)

(57) **Abstract**

According to various embodiments, a method for controlling a technical system is described, comprising determining an uncertainty of a mapping between an ambient space and a latent space, encoding a current state of the technical system to an encoded state of the technical system using the mapping, adapting the predetermined contact Hamiltonian dynamics to prioritize regions of the latent space where the uncertainty of the mapping is lower over regions of the latent space where the uncertainty of the mapping is higher, determining a latent space trajectory for the technical system according to the adapted contact Hamiltonian dynamics in the latent space, decoding the determined latent space trajectory to a trajectory for the technical system in ambient space according to an inverse of the mapping and controlling the technical system to at least partially follow the determined trajectory for the technical system in ambient space.

## Description

The present disclosure relates to devices and methods for learning dynamics of a technical system.

When (desired) dynamics of a technical system have been learned, it can be controlled accordingly. For example, dynamics of how a robot arm is supposed to move can be learned from demonstrations and a controller may then control the robot arm to follow these dynamics to operate autonomously. An efficient way to learn dynamics is, rather than learning dynamics itself in the ambient space including the states of the technical system, e.g. in terms of a vector field, to learn a mapping between the ambient space and a latent space on which predetermined dynamics are defined. However, approaches are still needed to effectively learn complex dynamics in such a context.

The publication A. Rahimi and B. Recht, "Random features for large-scale kernel machines," in Advances in Neural Information Processing Systems (J. Platt, D. Koller, Y. Singer, and S. Roweis, eds.), vol. 20, Curran Associates, Inc., 2007, referred to as reference [1] in the following, describes random Fourier features networks.

According to various embodiments, a method for controlling a technical system is provided, comprising:
- determining an uncertainty of a mapping between an ambient space, in which states of the technical system are given, and a latent space of encodings of states of the technical system, wherein contact Hamiltonian dynamics are predetermined for the latent space and wherein the mapping is given by at least one contactomorphism;
- encoding a current state of the technical system, given in the ambient space, to an encoded state of the technical system in the latent space using the mapping;
- adapting the predetermined contact Hamiltonian dynamics to prioritize regions of the latent space where the uncertainty of the mapping is lower over regions of the latent space where the uncertainty of the mapping is higher;
- determining a latent space trajectory for the technical system according to the adapted contact Hamiltonian dynamics in the latent space;
- decoding the determined latent space trajectory to a trajectory for the technical system in ambient space according to an inverse of the mapping; and
- controlling the technical system to at least partially follow the determined trajectory for the technical system in ambient space.

The method described above allows to effectively control a technical system according to dynamics with problem-specific properties (represented by the predetermined contact Hamiltonian dynamics in the latent space) while providing high robustness by avoiding regions of high uncertainty. According to one embodiment, the mapping is trained from demonstrations. Regions with high uncertainty then typically correspond to regions with few or no training data (e.g. demonstrations).

In the following, various examples are given.

Example 1 is a method for learning dynamics of a technical system as described above.

Example 2 the method of example 1, comprising training each contactomorphism of an ensemble of contactomorphisms to map states of the ambient space to the latent space and determining the uncertainty from differences between encoding and/or decoding results of the contactomorphisms.

This allows efficiently determining an uncertainty measure of the mapping between the ambient space and the latent space, e.g. at latent space points as in the following example 3 (and analogously at ambient space points if needed):
Example 3 the method of example 2, comprising determining the uncertainty at a latent space point by decoding the latent space point to ambient space by, for each contactomorphism of the ensemble, an inverse of the contactomorphism, determining an average ambient space point by averaging the ambient space points resulting from the decoding of the latent space point by the inverses, encoding the average ambient space point to a respective encoded average space point by each of the contactomorphisms (to arrive at a set of encoded average space points) and determining a variance of the encoded average space points as the uncertainty. See equation (19b) for a mathematical formulation of this approach according to an embodiment.

Example 4 the method of example 2 or 3, wherein the mapping is one of the contactomorphisms of the ensemble of contactomorphisms. According to one embodiment, at inference time, one of the contactomorphisms is chosen as a master, and encoding and decoding is performed using this master contactomorphism. In that case, the other members of the ensemble are for example only used for computing the uncertainty.

Example 5 the method of any one of examples 1 to 4, wherein the contact Hamiltonian dynamics are adapted by adding a control term to free dynamics, given by the contact Hamiltonian dynamics, wherein the control term points into a direction of decreasing uncertainty of the mapping in latent space.

Adaptation of the given Hamiltonian dynamics and following the adapted Hamiltonian dynamics can thus be efficiently performed.

Example 6 the method of any one of examples 1 to 5, wherein the predetermined contact Hamiltonian dynamics are further adapted to avoid regions of the latent space containing encodings of points of unsafe regions in ambient space.

This allows controlling the technical system such that it avoids unsafe regions, in particular obstacles.

Example 7 the method of example 6, wherein the contact Hamiltonian dynamics are adapted by adding a control term to free dynamics, given by the contact Hamiltonian dynamics, wherein the control term points into a direction of decreasing a term which includes the uncertainty of the mapping in latent space and which includes a penalty term which increases when approaching an unsafe region.

Adaptation of the given Hamiltonian dynamics and following the adapted Hamiltonian dynamics can thus be efficiently performed also for the case of avoidance of unsafe regions, e.g. obstacles.

Example 8 the method of any one of examples 1 to 7, comprising training the mapping by:
- providing demonstrations of dynamics of the technical system, wherein each demonstration demonstrates dynamics of the technical system by indicating a trajectory of the technical system in an ambient space;
- for each demonstration,
   ∘ encoding a starting state of the demonstration to an encoded starting state in a latent space by the mapping;
   ∘ determining a latent space trajectory starting at the encoded starting state according to the predetermined contact Hamiltonian dynamics in the latent space;
   ∘ decoding the latent space trajectory to a predicted ambient space trajectory according to an inverse of the mapping; and
   ∘ determining a loss for the demonstration including a prediction loss between the predicted ambient space trajectory and the trajectory indicated by the demonstration; and
- training the mapping to reduce a total loss including the losses determined for at least some of the demonstrations.

The contactomorphisms of the ensemble of contactomorphisms may be similarly trained (together): a loss is determined for each demonstration and each of the contactomorphisms as described in example 8 (wherein, according to one embodiment, the inverse is the inverse of a contactomorphism randomly sampled from the ensemble - this is to ensure that the contactomorphisms learn the same latent space structure) and the total loss includes all the losses (of the demonstrations and each contactomorphism per demonstration, i.e. e.g. as an average over demonstrations and contactomorphisms). The contactomorphisms (e.g. neural networks representing them) are then trained to reduce this total loss.

Example 9 the method of example 8, wherein the mapping is represented by at least one neural network and training the mapping to reduce the total loss comprises training the at least one neural network to reduce the total loss.

This allows efficient training of the mapping (e.g. a respective contactomorphism) since neural networks can be efficiently trained (by backpropagation of the loss).

Example 10 the method of any one of examples 1 to 9, wherein the predetermined contact Hamiltonian dynamics in latent space are harmonic oscillator dynamics.

Example 11 the method of any one of examples 1 to 9, wherein the predetermined contact Hamiltonian dynamics in latent space are harmonic oscillator dynamics with an additive damping term in the energy function.

This ensures stable convergence to target end points.

Example 12 the method of any one of examples 1 to 9, wherein the predetermined contact Hamiltonian dynamics in latent space are harmonic oscillator dynamics with a damping factor in the energy functions.

Thus, all the terms of the contact Hamiltonian are dependent on a damping value. As a result, the controlled system exhibits stable, convergent behavior when sufficient energy is available. However, if the controlled system enters regions where the energy level is insufficient, it will halt prematurely.

Example 13 is a controller, configured to perform a method of any one of examples 1 to 12.

Example 14 is a computer program comprising instructions which, when executed by a computer, makes the computer perform a method according to any one of examples 1 to 12.

Example 15 is a computer-readable medium comprising instructions which, when executed by a computer, makes the computer perform a method according to any one of examples 1 to 12.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a robot.
Figure 2 shows a flow diagram illustrating a method for learning dynamics of a technical system.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

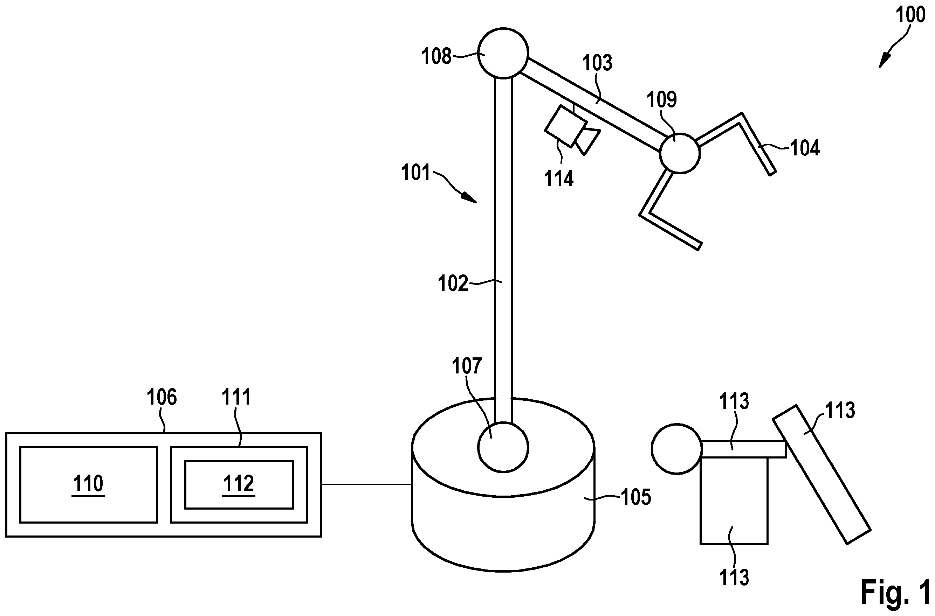

Figure 1 shows a robot 100.

The robot 100 includes a robot arm 101, for example an industrial robot arm for handling or assembling a work piece (or one or more other objects 113). The robot arm 101 includes manipulators 102, 103, 104 and a base (or support) 105 by which the manipulators 102, 103, 104 are supported. The term "manipulator" refers to the movable members of the robot arm 101, the actuation of which enables physical interaction with the environment, e.g. to carry out a task. For control, the robot 100 includes a (robot) controller 106 configured to implement the interaction with the environment according to a control program. The last member 104 (furthest from the support 105) of the manipulators 102, 103, 104 is also referred to as the end-effector 104 and includes a grasping tool (which may also be a suction gripper).

The other manipulators 102, 103 (closer to the support 105) may form a positioning device such that, together with the end-effector 104, the robot arm 101 with the end-effector 104 at its end is provided. The robot arm 101 is a mechanical arm that can provide similar functions as a human arm.

The robot arm 101 may include joint elements 107, 108, 109 interconnecting the manipulators 102, 103, 104 with each other and with the support 105. A joint element 107, 108, 109 may have one or more joints, each of which may provide rotatable motion (i.e. rotational motion) and/or translatory motion (i.e. displacement) to associated manipulators relative to each other. The movement of the manipulators 102, 103, 104 may be initiated by means of actuators controlled by the controller 106.

The term "actuator" may be understood as a component adapted to affect a mechanism or process in response to be driven. The actuator can implement instructions issued by the controller 106 (the so-called activation) into mechanical movements. The actuator, e.g. an electromechanical converter, may be configured to convert electrical energy into mechanical energy in response to driving.

The term "controller" may be understood as any type of logic implementing entity, which may include, for example, a circuit and/or a processor capable of executing software stored in a storage medium, firmware, or a combination thereof, and which can issue instructions, e.g. to an actuator in the present example. The controller may be configured, for example, by program code (e.g., software) to control the operation of a system, a robot in the present example. The controller 106 may for example gather information about the control situation by means of a camera 114.

In the present example, the controller 106 includes one or more processors 110 and a memory 111 storing code and data based on which the processor 110 controls the robot arm 101. According to various embodiments, the controller 106 controls the robot arm 101 on the basis of a machine-learning model (e.g. including one or more neural networks) 112 stored in the memory 111.

One option to control the robot arm 101 is that the controller 106 learns, by means of the machine-learning model 112, dynamics of the robot arm from demonstrations (typically from a human user) how to perform a certain task (like reaching for an object). This means that it is demonstrated to the controller 106 (e.g. by moving the robot arm manually by a human user) in what direction and with which speed the robot arm should move when being in a certain state (e.g. in particular end-effector position). When the controller 106 has learned these dynamics (e.g. the machine-learning model 112 is trained to output, for a state, a velocity vector), the controller 106 can simply operate as velocity controller and follow the dynamics (i.e. follow a vector field representing the dynamics) to perform the task.

Learning robot dynamics from demonstrations has shown to be an efficient and intuitive approach for encoding highly dynamic motions into a robot's repertoire. One effective approach to learn dynamics is to encode demonstrated trajectories (which comprise sequences of states in an ambient space, e.g. end-effector poses) to a latent space. Dynamics can then be followed in latent space and states or velocities given by the dynamics in latent space can be decoded to ambient space to give dynamics in ambient space.

Differential geometry provides a formal framework for connecting the dynamics of a target system (to be controlled, e.g. robot 101) in the ambient space to a more tractable representation in the latent space through a change of coordinates. This transformation can be rigorously defined by the concept of diffeomorphism. Building on this foundation, a prevalent approach for learning dynamical systems (e.g. robot device dynamics) involves defining a simple and stable dynamical system in the latent space. This dynamic system in latent space is then aligned with the target dynamics in the ambient space (i.e. the dynamics demonstrated by the demonstrations) by learning the necessary diffeomorphism (from the demonstrated dynamics). This approach has also been extended to incorporate contraction behaviors, ensuring robustness and stability (e.g. by choosing dynamics in latent space which have a contraction behavior and a diffeomorphism which maintains this contraction behavior).

The Hamiltonian framework enables the description of relationships between conjugate variables of a second order dynamics, such as position and momentum in classical mechanics, in precise geometric terms. Conservative systems, often described by Hamiltonian mechanics, derive conjugate variables from energy conservation. Numerous approaches focus on parametrizing this energy function to model dynamical systems. Other approaches incorporate a symplectic structure into neural networks to directly approximate the dynamical flow. The symplectic structure provides the geometric framework for Hamiltonian mechanics, defining the relationships between position and momentum. Building on this perspective, this geometric structure may be learned from data in a coordinate-invariant fashion. However, modeling systems with friction and energy exchange requires extending the Hamiltonian formulation.

This can be done by employing parametrized functions to represent forces and damping terms, treating them as ports that introduce external disturbances on the symplectic manifold. While this approach effectively extends the Hamiltonian formulation to damped and controlled systems, it disrupts the symplectic structure by no longer embedding the physical relationships between conjugate variables influenced by the disturbance terms. This complicates the interpretation of the energy flow on the symplectic manifold, undermining theoretical consistency and limiting the generalizability of the learned dynamics model. An extension is to double the dimension of the symplectic manifold to indirectly represent non-conservative dynamics while preserving the symplectic structure. Although this approach preserves the advantages of the symplectic manifold, it introduces additional variables that are not always physically meaningful, hindering its interpretability.

An alternative and more explainable extension of the Hamiltonian framework is provided by contact Hamiltonian theory. This includes augmenting the symplectic manifold with a single, physically significant variable, transitioning the underlying geometry from symplectic to contact geometry. This modification allows for the natural incorporation of energy dissipation and generation, making it particularly well-suited for modeling non-conservative systems. Furthermore, contact Hamiltonian theory extends beyond classical mechanics, offering valuable applications in thermodynamic processes and quantum mechanical systems. Building on this foundation, the contact Hamiltonian function can be parametrized with a neural network (e.g. corresponding to the machine learning model 112) to accurately model a broader class of dynamical systems.

The approaches described above based on diffeomorphism learning remain limited to learning first-order dynamical systems, which fall short at modeling dynamics featuring self-crossing trajectories, physical interactions, and asymmetric obstacle avoidance behaviors. Extending diffeomorphisms learning to purely dissipative second-order dynamical systems remains insufficient for handling dynamics with limit cycles or non-zero curl components. On the other hand, approaches based on the Hamiltonian and contact Hamiltonian frameworks often lack robust guarantees for accurately predicting dynamics beyond the training data (i.e. demonstrations). Moreover, they do not provide a mechanism to encode valuable properties into the target dynamics, especially those that are challenging to infer directly from data. These limitations prevent the applicability of such methods in control applications.

In view of the above, according to various embodiments, an approach for learning demonstrated dynamics, e.g. for robot device control (e.g. performed by the controller 106) is provided which is based on
- a definition of contact Hamiltonian dynamics with problem-specific properties (in latent space), designed for transfer to target dynamics (in ambient space), and
- a design of an expressive class of neural networks to represent contact diffeomorphisms, ensuring the preservation of dynamic and geometric properties of the latent dynamics while adapting them to the observed data (i.e. demonstrations).

The approach that is provided addresses the key technical challenge of designing an appropriate architecture for the parameterized contact diffeomorphism such that it preserves the geometric contact structure of the baseline dynamics (i.e. the dynamics in latent space) to maintain their physical interpretability while also being analytically invertible to minimize the computational burden of the approach (i.e. to allow efficient coding and decoding of states or velocities etc. to and from latent space).

As mentioned above, the learning of demonstrated dynamics includes learning a diffeomorphism. According to various embodiments, the diffeomorphism is represented by a machine learning model. The framework for learning dynamics using this model is in the following embodiments denoted as "ContactMiltonianNet". So, learning the demonstrated dynamics can be seen to correspond to training the machine learning model of ContactMiltonianNet. Contact geometry is used to define baseline dynamics in latent space. These are transformed by the diffeomorphism to be learned to fit the demonstrated target dynamics. This allows
- the learning of general second-order dynamical systems with complex energy behaviors. These systems can represent dissipative processes or interactions with the environment in classical mechanics, as well as processes in thermodynamics and quantum mechanics.
- the learned dynamics to be endowed with specific guarantees, enhancing robustness outside the data support. This is a key requirement for
extending the framework beyond reconstructing dynamical systems for analysis purposes to effectively control them.

ContactMiltonianNet (CMN) is a framework leveraging Riemannian and contact geometry as inductive biases to learn complex dynamical systems. By integrating a learning model with these geometric foundations, it delivers dynamic predictions that are robust, interpretable, and grounded in physical principles.

Applying the framework to control a technical system (e.g. robot arm 101) includes choosing a baseline latent dynamics model (i.e. a dynamics model in latent space) which provides specific desired properties of the target dynamics, such as stability, energy conservation, or specific interactions with the environment. These properties are embedded using a contact structure within the latent space. Subsequently, to adapt the baseline model to complex (demonstrated) target dynamics, a contact diffeomorphism is learned to identify an appropriate change of coordinates.

For the following detailed description of how the framework can be applied for learning dynamics of a technical system such as the robot arm 101, and thus in the end learning a control strategy for the technical system, information about Hamiltonian and contact Hamiltonian dynamics is given in the following.

Let 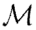 be a smooth compact manifold, and let 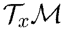 denote the tangent space at point *x* ∈ 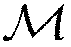 . The collection of all the tangent spaces identifies the tangent bundle 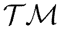 = 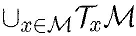 *.* A vector field *X* : 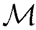 → 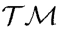 assigns a tangent vector *v* to each point *x* ∈ 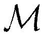 . The set of all the vector fields over 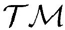 is denoted as Γ( 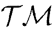 ). A differential 1-form $α : TM \to ℝ$ is a smooth map field acting on vectors of the tangent bundle. For a smooth function $f : M \to ℝ$, the 1-form α *= df* generalizes the concept of gradients from Euclidean spaces. Specifically, df measures the variation of f under an infinitesimal motion on the manifold. This motion can be described locally by a starting point *x* and a displacement direction *v,* such that (*x, v*) ∈ 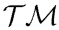 . Alternatively, it can be expressed globally by a vector field X. The variation of f along the vector field X is then given by *df* (*X*)*.* Importantly, this variation is independent of the choice of reference frame. To preserve this invariance, *df* must transform covariantly with X. Consequently, *df* resides in the cotangent bundle *T** 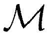 , the dual space to 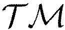 .

A differential 2-form $ω : TM \times TM \to ℝ$ is a skew-symmetric, bilinear, and smooth field of maps acting on pairs of tangent vectors. A 2-form is called symplectic if it is both closed, i.e. *dω* = 0, and non-degenerate.

The symplectic form does not possess the necessary properties to define an inner product. However, it imparts a sense of orientation to the space and establishes a fundamental relationship between differential 1-forms and vector fields. In particular, given a 1-form *df*, the symplectic form *ω* uniquely determines a vector field *X_{f}* that is tangent to the level sets of *f*. This relation is defined by $df \left(X\right) = ω \left({X}_{f}, X\right) , ∀ X ∈ Γ \left(TM\right)$ (1)

By definition, *f* remains constant along the flow of *X_{f}*, which in turn preserves the symplectic form *ω*, i.e., 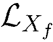 *ω* = 0 where 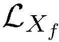 denotes the Lie derivative.

Let ( 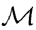 *, ω*) be a compact symplectic manifold. The non-degeneracy condition of *ω* inherently requires the dimension of 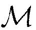 be even. The symplectic structure equips 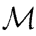 with a natural geometric framework for describing Hamiltonian dynamics. Specifically, it associates a given energy function $H : M \to ℝ$ with a vector field *X_{H},* via equation (1). This vector field generates a flow that preserves both the energy level sets of *H* and the symplectic form *ω.* In physical terms, *X_{H}* represents the equations of motion for conservative systems in classical mechanics.

A diffeomorphism *ϕ* : ( 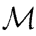 *, ω*) → ( 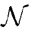 *, ω'*) between two symplectic manifolds is called a symplectomorphism if it preserves the symplectic form, i.e., *ϕ*ω'* = W. The symplectic flow *x*(*t*)*,* generated by integrating the Hamiltonian vector field *X_{H},* can be understood as the action of a one-parameter group of diffeomorphisms *ϕ*(*t*) on a point *x* ∈ ( 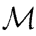 *, ω*). This is defined by $x \left(t\right) = ϕ \left(t\right) \left(x\right) : \left[0, T\right] ⊂ ℝ \to \left(M, ω\right) .$ (2)

While symplectic manifolds provide a geometric framework for modeling the dynamics of conservative systems in classical mechanics, a more general approach is required to describe non-conservative systems. This is addressed by contact manifolds, the odd-dimensional counterparts of symplectic manifolds. A contact manifold is defined as ( 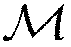 , *η*), where 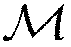 is an odd-dimensional smooth manifold, and *η* is a non-degenerate 1-form known as the contact form. Like symplectic geometry, contact geometry establishes a framework connecting scalar functions to vector fields, enabling the description of dynamical systems. Given an energy function $H : M \to ℝ$, the dynamics on a contact manifold are determined by a contact Hamiltonian vector field *X_{H}*, governed by $dH \left(X\right) = dη \left({X}_{H}, X\right) - {L}_{{X}_{H}} η \left(X\right) , ∀ X ∈ Γ \left(TM\right) .$ (3)

Unlike symplectic geometry, where the symplectic form is strictly preserved, contact geometry allows the contact form *η* to be preserved only up to a scaling factor $a ∈ ℝ$. This fundamental distinction has significant implications, notably that the energy function *H* in contact Hamiltonian dynamics evolves over time. A diffeomorphism *φ* : ( 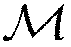 , *η*) → ( 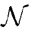 , *η'*) between two contact manifolds is termed a contactomorphism if it satisfies φ**η'* = *aη*, thereby preserving the contact structure up to the scaling factor. Analogous to the symplectic case, the integral flow *x*(*t*) generated by the contact Hamiltonian vector field *X_{H}* can be seen as a contactomorphism that maps different representations of the same manifold, i.e., $x \left(t\right) = φ \left(t\right) \left(x\right) : \left[0, T\right] ⊂ ℝ \to \left(M, η\right) .$ (4)

The ContactMiltonianNet aims to parameterize this transformation to link the target dynamics with a latent representation that provides specific guarantees.

In the following, the ContactMiltonianNet for learning dynamics of a technical system to be controlled within a contact Hamiltonian framework is described. This starts with an explanation on how latent dynamics on a contact manifold are described. Then, details about a contactomorphisms architecture of to map these dynamics to the ambient space while preserving contact structure are given. A training process for learning contactomorphisms for such a mapping is described further below.

Let, for the definition of latent contact Hamiltonian dynamics (i.e. Hamilton dynamics in the latent space) ( 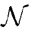 , *η'*) be a 2d+1-dimensional contact manifold, locally defined by a set of canonical coordinates **z** = {**q**, **p***, s*}, with **q** = {q₁,...*q_{d}*}*,* **p** = {*p*₁,...*p_{d}*}*.* In the context of classical mechanical systems, the conjugate variables *qᵢ* and *pᵢ* represent position and momentum, respectively, while s corresponds to the Lagrangian action. In conservative systems, s remains constant, reflecting energy conservation. A change in s from its initial value signals the presence of non-conservative phenomena, such as dissipation or external energy inputs.

A dynamic system on the latent space ( 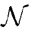 *, η'*) can be defined by choosing a contact Hamiltonian function *H_{g}*(**z**). Recall that the contact form *η'* establishes a connection between *H_{g}*(**z**) and its associated vector field *Z_{H_{g}}* via equation (5). In local coordinates, the vector field *Z_{H_{g}}* is expressed as ${Z}_{{H}_{g}} : \left\{\begin{matrix}{\dot{q}}_{i} = \frac{\partial {H}_{g}}{\partial {p}_{i}} , \\ {\dot{p}}_{i} = - \frac{\partial {H}_{g}}{\partial {q}_{i}} - {p}_{i} \frac{\partial H}{\partial s} \\ \dot{s} = {p}_{i} \frac{\partial {H}_{g}}{\partial {p}_{i}} - {H}_{g} .\end{matrix}\right.$ (5)

The properties of this dynamical system, determined by the choice of *H_{g}*, are preserved and transferred to the target dynamics under a suitable coordinate change. The choice of dynamical system in ( 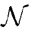 , *η'*) may be problem specific.

For instance, to ensure periodic orbits in the target dynamics, the simple harmonic oscillator can be chosen as the latent dynamics, defined by equation (6a). ${H}_{g} = \frac{1}{2} {p}^{⊤} p + \frac{1}{2} {q}^{⊤} q ,$ (6a) ${H}_{g} = \frac{1}{2} {p}^{⊤} p + \frac{1}{2} {q}^{⊤} q + s$ 6b) ${H}_{g} = \left(\frac{1}{2}{p}^{⊤}p+\frac{1}{2}{q}^{⊤}q+s\right) {s}^{2}$ (6c)

Dynamical trajectories demonstrated for reproduction purposes are often defined by target end points to be reached. To ensure stable convergence to these end points, a damping term can be incorporated into the baseline dynamics in the latent space. To do so, the dependence of the contact Hamiltonian on the Lagrangian action s, which governs the variation of the system's total energy, is lever-aged according to one embodiment. This relationship is expressed as $H \left(t\right) = H \left(0\right) {e}^{{\int }_{0}^{t} \partial H / \partial s , dτ}$ (7)

Consequently, the additive s (damping) term in equation (6b) is sufficient to ensure the progressive depletion of the system energy and the convergence toward the attraction center {**q**, **p**, *s*} = 0.

In scenarios where safety must be ensured by stopping the system to be controlled when it approaches an unsafe region of the state space ( 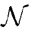 *, η'*)*,* the dynamics described by equation (6c) can be employed effectively. Introducing a dependence on the damping value s in all the terms of the contact Hamiltonian (by including s as a damping factor) allows the total energy *H* to vanish while retaining non-zero values for **q** and **p**. This mechanism allows the dynamics to come to a stop before reaching the center of attraction. As a result, the controlled system exhibits stable, convergent behavior when sufficient energy is available, determined by the region of the state space where the dynamics unfold. However, if the controlled system enters regions where the energy level is insufficient, it will halt prematurely.

The trajectories described by the latent space dynamics require a suitable coordinate transformation to align with the demonstrated target dynamics. While diffeomorphisms are commonly used for this purpose in first-order systems, they fail to preserve the interplay between conjugate variables that govern second-order systems. To address this, a contactomorphism is used (mapping between ambient space and latent space) to preserve the properties of the contact form *η'* of the latent space: a contactomorphism *φ* : ( 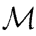 *, η*) → ( 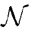 *, η'*) relates the latent space ( 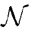 , *η'*) with its alternative representation, the ambient space ( 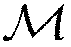 , *η*), which is described using a different set of canonical coordinates x. By adopting this coordinate framework, the baseline dynamics are aligned with the target dynamics while preserving their fundamental properties.

As described above (see the explanations in context of equations (2) and (4)), a group of contactomorphisms *φ*(*t*) represents the transformation that guides an initial state along a contact Hamiltonian flow on the manifold. Accordingly, according to various embodiments, a contactomorphism that relates the ambient space and the latent space is defined as the endpoint of an equivalent contact flow *φᵣ*(*T*), as follows, $z = {φ}_{r} \left(T\right) \left(x\right) , x = {φ}_{r}^{- 1} \left(T\right) \left(z\right)$ (8) where **z** ∈ ( 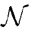 *, η'*) and x ∈ ( 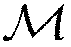 *, η*) represents a latent space element and ambient space element (e.g. robot device states), respectively.

For expressivity, this contact transformation (contactomorphism) is implemented as a composition of K (e.g. K = 12) sequential contactomorphisms, i.e. the contactomorphism is composed of K transformation steps which are sequential in time. For mapping from ambient space to latent space, each transformation step updates the initial point x by following a contact Hamiltonian flow for a duration *τ* (e.g. 0.2 seconds) of the time variable t of the flow, leading to ${φ}_{r} \left(T\right) = {φ}_{{r}_{K}} \left(τ\right) ∘ ⋯ ∘ {φ}_{{r}_{k}} \left(τ\right) ∘ ⋯ ∘ {φ}_{{r}_{1}} \left(τ\right)$ (9a) ${φ}_{r}^{- 1} \left(T\right) = {φ}_{{r}_{1}}^{- 1} \left(τ\right) ∘ ⋯ ∘ {φ}_{{r}_{k}}^{- 1} \left(τ\right) ∘ ⋯ ∘ {φ}_{{r}_{K}}^{- 1} \left(τ\right)$ (9b)

The contactomorphisms are applied sequentially with respect to time so this means that K times *τ* equals T. In other words, each *φ_{rₖ}*(*τ*) is followed for *τ* seconds such, when they have all been followed, the integration was done over the time T of the time variable t of the flow.]

Each individual contactomorphism *φ_{rₖ}*(*τ*) is defined using an associated contact Hamiltonian function ${H}_{k} = \frac{1}{2} {p}^{⊤} M \left(p\right) p + \frac{1}{2} {q}^{⊤} V \left(q\right) q + F \left(q\right) s$ (10) where *M*(**p**), *V*(**q**), ***F*(q)** are scalar functions of the conjugate variables (the index k is omitted here for simplicity). These functions can for example be parameterized using random Fourier features networks, see reference [1]. This means that each of ***M*(p),** *V*(**q**), *F*(**q**) is represented by a neural network (e.g. correspond to the machine learning model 112) which is trained when the dynamics (in particular the contactomorphism *φ_{rₖ}*(*τ*)) is learned and a random Fourier features network is for example used as such a neural network.

The vector field associated with the Hamiltonian function (i.e. energy function) is for example performed using a contact splitting integrator which updates the state **{q, p,** *s*} in three stages (which add up to an integration of the vector field over the time step *τ*):
1. $\left\{\begin{matrix}{q}_{j + 1} = {q}_{j} , \\ {p}_{j + 1} = {p}_{j} - \left({p}_{j}{F}_{j}+∇{F}_{j}{s}_{j}\right) τ , \\ {s}_{j + 1} = {s}_{j} - {F}_{j} {s}_{j} τ ,\end{matrix}\right.$ (11a)
2. $\left\{\begin{matrix}{q}_{j + 2} = {q}_{j + 1} , \\ {p}_{j + 2} = {p}_{j + 1} - ∇ {V}_{j + 1} τ , \\ {s}_{j + 2} = {s}_{j + 1} - {V}_{j + 1} τ ,\end{matrix}\right.$ (11b)
3. $\left\{\begin{matrix}{q}_{j + 3} = {q}_{j + 2} + \left({M}_{j + 2}+{p}_{j + 2}^{⊤}∇{M}_{j + 2}\right) {p}_{j + 2} τ , \\ {p}_{j + 3} = {p}_{j + 2} , \\ {s}_{j + 3} = {s}_{j + 2} + {p}_{j + 2}^{⊤} \left({p}_{j + 2}^{⊤}∇{M}_{j + 2}+{M}_{j + 2}\right) {p}_{j + 2} τ\end{matrix}\right.$ (11c)

Here, *Mⱼ = M*(**pⱼ**)*, Vⱼ* = *V*(**qⱼ**) and *Fⱼ* = *F*(**q***ⱼ*). This architecture offers the advantage of being analytically invertible, minimizing the computational cost of computing the inverse transformation ${φ}_{{r}_{k}}^{- 1} \left(τ\right)$*.*

Equipping the baseline latent dynamics with a contactomorphism enables the modeling of a dynamical system in ambient coordinates. Given an initial point **x**₀ ∈ ( 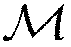 , *η*) in ambient space, an ambient space trajectory over a time period *t* ∈ [0, *t*₁] is computed (e.g. by controller 106) in three steps (assuming a trained contactomorphism *φᵣ*(*T*) and predetermined dynamics in latent space):
1. Map **x**₀ to the latent space via equation (9a): ${z}_{0} = {φ}_{r} \left(T\right) \left({x}_{0}\right)$ (12a)
2. Integrate the latent dynamics to get a latent space trajectory: $z \left(t\right) = {φ}_{g} \left(t\right) \left({z}_{0}\right) , ∀ t ∈ \left[0, {t}_{1}\right]$ (12b) where *φ_{g}*(*t*) is the group of contactomorphisms associated with the contact flow of the Hamiltonian function *H_{g}*(**z**) according to the chosen latent dynamics (e.g. according to one of equations (6a) - (6c)).
3. Map back the latent space trajectory to ambient space via equation (9b): $x \left(t\right) = {φ}_{r}^{- 1} \left(T\right) \left(z\left(t\right)\right) , ∀ t ∈ \left[0, {t}_{1}\right]$ (12c)

This process can be formally expressed as a composition of Hamiltonian flows, $x \left(t\right) = {φ}_{r}^{- 1} \left(T\right) ∘ {φ}_{g} \left(t\right) ∘ {φ}_{r} \left(T\right) \left({x}_{0}\right) , t ∈ \left[0, {t}_{1}\right]$ (13)

The composition of Hamiltonian paths remains Hamiltonian. Consequently, the resulting flow **x**(*t*) = *φₘ*(*t*)(**x**₀) (of equation (13)) corresponds to an ambient contact Hamiltonian function *Hₘ.* The use of contactomorphisms, rather than simple diffeomorphisms, ensures that the ambient dynamics adhere to the contact Hamiltonian formulation, thereby guaranteeing the existence of a physically meaningful relationship between the conjugate variables. For instance, assuming the stable harmonic oscillator of equation (6b) as the latent dynamics, the resulting Hamiltonian *Hₘ* can be determined analytically as follows ${H}_{m} = \frac{1}{2} {φ}_{r}^{p} {\left(x\right)}^{⊤} {φ}_{r}^{p} \left(x\right) + \frac{1}{2} {φ}_{r}^{q} {\left(x\right)}^{⊤} {φ}_{r}^{q} \left(x\right) + {φ}_{r}^{s} \left(x\right)$ (14)

Here, ${φ}_{r}^{q} \left(x\right) , {φ}_{r}^{p} \left(x\right)$ and ${φ}_{r}^{s} \left(x\right)$, respectively, denote the latent representations of position, momentum, and the action Lagrangian s, expressed as functions of the ambient coordinate system.

Having an analytical expression for the ambient space Hamiltonian function facilitates the analysis of the term ∂*Hₘ*/∂*s*, which determines the rate of energy absorption or dissipation in the ambient dynamics, as described by equation (7). While the ambient dynamics, derived from a transformed stable harmonic oscillator, inherently converges toward its attractor, the rate and efficiency of convergence depends on the energy dissipation. Decreasing energy generally indicates faster stabilization and closer alignment with the attractor.

As mentioned above, learning the dynamics to be able to generate ambient space trajectories according to (12a)-(12c) for the controlled technical system (e.g. robot arm 101) to follow corresponds to training the contactomorphism *φᵣ*(*T*)*.* The training may be performed as follows.

The target dynamics are demonstrated by demonstrations. This is, for example, done by a human operator moving the robot arm 101 along a suitable trajectory to perform a task in a respective control situation (e.g. to pick up an item and move it to a target location). These demonstrations, i.e., a set of trajectories (each trajectory being a sequence of technical system states in ambient space) represent the target dynamics (i.e. following dynamics in ambient space as they should be followed by the robot device). In case of another technical system than a robot arm, a training dataset may be similarly provided, e.g. a vehicle may be manually controlled to demonstrate target dynamics etc.

Given a training dataset of B trajectories of the target dynamics {**x̅***_{b}*(*t*)*, t* ∈ [0, *t_{b}*]}_{*b*∈[1*,B*]}*,* the contactomorphism *φᵣ*(*T*) may be trained by the following steps (e.g. starting from a random initial version of the contactomorphism, i.e. a random initialization of the neural network representing *M*(**p**), *V*(**q**), *F*(**q**)):
1. Map the trajectories into the latent space ( 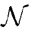 *, η'*) via the (current version of the) contactomorphism *φᵣ*(*T*), resulting in a set of transformed trajectories {**z̅***_{b}*(*t*)*, t* ∈ [0, *t_{b}*]}_{*b*∈[1*,B*]}
2. Estimate the dynamics predictions for the initial conditions of the trajectories {**x̅***_{b}*(0)}_{*b*∈[1*,B*]} via equation (12) for both the ambient and la tent space, resulting in estimated trajectories
   {**x***_{b}*(*t*)*, t* ∈ [0, *t_{b}*]}_{*b*∈[1*,B*]}} and
   {**z***_{b}*(*t*)_{,} *t* ∈ [0, t_{b}]}_{b∈[1,*B*]}}, respectively.
3. Compute the estimation error in both spaces using the (average) loss function $l = \frac{1}{B} {\sum }_{b = 1}^{B} \frac{1}{{t}_{b}} {\sum }_{t = 0}^{{t}_{b}} \left(\begin{matrix}{w}_{x} {\left‖{\overline{x}}_{b}\left(t\right)-{x}_{b}\left(t\right)\right‖}_{2}^{2} + \\ {w}_{z} {\left‖{\overline{z}}_{b}\left(t\right)-{z}_{b}\left(t\right)\right‖}_{2}^{2}\end{matrix}\right) ,$ (15)
where *wₓ* and *w_{z}* are weighting factors balancing the ambient and latent space components. Typically, *wₓ* ≫ *w_{z}* (e.g. *wₓ*=1, *w_{z}*=0.01), as the primary focus is on accurately capturing the ambient dynamics. However, the latent space error term acts as a useful regularizer. The contactomorphism (i.e. the neural networks representing the *M*(**p**), *V*(**q**), *F*(**q**)) is then trained to reduce the loss (i.e. the weights of the neural networks are adjusted by backpropagation of the loss in direction of decreasing loss).

For robot control like controlling the robot arm 101, the position and velocity of the end-effector are available as state variables, denoted as {**q**, **q̇**}. To transform these variables into canonical coordinates in real time, a dynamical model of the robot arm may be used to compute online the workspace inertia matrix Λ. Assuming a Hamiltonian in mechanical form, the canonical momentum is obtained as **p** = Λ**q̇**. The total energy of the system at a given time t can be modeled as the sum of the robot kinetic energy, the dissipation term, and the energy stored in the environment, e.g. resulting from work performed by the robot (such as displacing an object. This relationship can be expressed as: $H \left(t\right) = \frac{1}{2} {\dot{q}}^{⊤} Λ \dot{q} + s - {\int }_{0}^{t} {f}_{e}^{⊤} δqdτ$ (16) where **f***ₑ* represents the external force applied to the end-effector and *δ***_{q}** denotes an infinitesimal robot motion. The integral term ${\int }_{0}^{t} {f}_{e}^{⊤} δqdτ$ is negative during a pulling or lifting action and includes both the conservative and non-conservative components of the robot interaction with its environment

Usage of (baseline) latent space dynamics given by a predetermined (Hamiltonian) energy function and learning a contact diffeomorphism to align the dynamics in the latent space with target dynamics while preserving the physical relationships between conjugate variables encoded in the contact structure as described above (i.e. in particular the "ContactMiltonianNet" framework) enables the learning of the dynamic behavior of complex dynamical systems while allowing incorporating problem-specific properties, such as known characteristics of the target dynamics that are difficult to infer from data or ensuring stability in control applications.

However, ContactMiltonianNet as described above does not ensure that the predicted dynamics (i.e. predicted trajectories in ambient space) converge to the training data's support (i.e. regions of ambient space including demonstrations), which is highly desirable in control applications where unexpected behavior in a controlled technical system must be avoided. In regions of uncertainty, where insufficient information exists to infer dynamic behavior (i.e. no or too few demonstrations are present), convergence to the data's support remains the only meaningful option. Furthermore, ContactMiltonianNet lacks the flexibility to adapt the learned dynamics for reproduction purposes in new environments.

In view of the above, an approach, denoted by "GeometricContactFlows" in the following, which builds on ContactMiltonianNet is provided which addresses the above limitations by
- Utilization of an ensemble of contactomorphisms to quantify the uncertainty in dynamics prediction
- A generalization mechanism based on Riemannian geodesics, utilizing ensemble uncertainty or similar metrics to identify undesired state regions (of ambient space). This mechanism allows governing the behavior of the dynamical system in regions beyond the data support and adapts to unseen scenarios

GeometricContactFlows addresses the technical challenge of deriving an equivalent Riemannian metric from the dynamics defined on the contact manifold, enabling its interpretation as a geodesic. This Riemannian metric serves as a tool to manage the learned dynamic behavior, as perturbing it allows for modifications of the geodesics, resulting in bent or altered dynamic behavior.

GeometricContactFlows builds on the concept of learning contactomorphisms for dynamics prediction as in ContactMiltonianNet, with specific improvements to enhance its functionality as a dynamics generator for control applications. This is achieved by introducing an ensemble of contactomorphisms to quantify the uncertainty of the dynamics prediction and using this measure to adjust the predicted dynamics outside the data's support.

This enables a more intuitive and direct generalization of the learned dynamics in regions where data are unavailable, ensuring convergence toward data-informed regions (i.e. regions of ambient space where demonstrations are present). Further, this allows the learned dynamics to be adapted to new environments (i.e. other environments than those where the demonstrations were may), facilitating the use of the same dynamics to control systems across different tasks and scenarios.

GeometricContactFlows employ an ensemble of contact diffeomorphisms to morph a baseline latent dynamics to fit the target dynamics. The level of agreement among the ensemble members distinguishes regions well-supported by data from those with high uncertainty, allowing the respective device (e.g. controller 106) to adapt the learned behavior based on the uncertainty level.

More specifically, a Riemannian metric describing the ambient dynamics is modified to incorporate uncertainty. As a result, the geodesics computed using this modified metric identifies dynamic trajectories that avoid regions of high uncertainty. Moreover, GeometricContactFlows supports targeted modifications of the metric in specific regions, allowing considering unseen obstacles or interactions during training. This adaptability significantly enhances the generalization of the learned behaviour to new scenarios.

Symplectic, contact, and Riemannian geometries provide distinct yet complementary viewpoints for understanding the geometry of dynamical systems. Specifically, the symplectic and Riemannian structures provide two distinct mechanisms for associating a 1-form to a vector field, thereby establishing connections between the tangent and cotangent bundles.

An important insight from differential geometry is its ability to characterize and identify the structure of data sampled from dynamical trajectories in the ambient space. A widely accepted hypothesis in machine learning supposes that such data resides within a lower-dimensional subspace. Riemannian geometry offers a powerful framework for analyzing this subspace as a manifold, which is an n-dimensional generalization of a smooth surface equipped with a metric (the Riemannian metric) that locally describes its curvature. Using this framework, dynamic trajectories can be represented as geodesics with the curvature and the associated Riemannian metric capturing essential properties of the underlying dynamical system. The Riemannian metric can also distinguish the data support region from the surrounding ambient space.

A Riemannian metric $g : TM \times TM \to ℝ$ is a smooth, symmetric, and positive definite bilinear field of maps defined on pairs of vectors in the tangent bundle. This enables the introduction of an inner product on the tangent spaces of the manifold, allowing measuring distances and curve lengths. For a smooth curve *x*(*t*) : [*t*₀*, t*₁] → 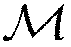 , the length ℓ with respect to the metric *g* is $l = {\int }_{{t}_{0}}^{{t}_{1}} \sqrt{g \left(\dot{x}\left(t\right),\dot{x}\left(t\right)\right)} dt$ (17) where *ẋ*(*t*) ∈ *T*_{*x*(*t*)} 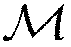 is the vector tangent to the curve at *x*(*t*)*.* The curve minimizing this length between two points *x*(*t*₀) and *x*(*t*₁) on 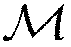 is called a geodesic. Geodesics generalize the concept of straight lines in Euclidean space to curved spaces, representing the shortest paths in the geometry induced by *g.*

The Riemannian metric also establishes a correspondence between vector fields and covector fields, thus defining a bijection between the tangent bundle 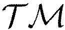 and the cotangent bundle *T** 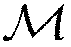 . Specifically, the metric *g* associates a vector field *X_{f}* with the differential 1-form *df* via $df \left(X\right) = g \left({X}_{f}, X\right) , ∀ X ∈ Γ \left(TM\right)$ (18)

This connection allows the variation *df*(*X*) to be interpreted as a measure of alignment between the vector fields *X* and *X_{f}.* A greater alignment corresponds to a larger variation of *f* along *X.* Consequently, *X_{f}* is orthogonal to the level sets of *f* and represents a gradient vector field. The integral curves of *X_{f},* denoted *x_{f}(t),* can be seen as the geodesics with respect to a rescaled version of the original Riemannian metric *g*, known as the Jacobi metric. This interpretation arises by reparametrizing the time t as the arc-length S, leading to the Jacobi metric *ĝ =* (*e - f*(*x*))*g* where *e* is an auxiliary scalar variable satisfying *e > f*(*x*) ∀*x* ∈ 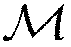 , ensuring that *ĝ* remains positive definite everywhere. The variable *e* not only determines the trajectories covered on the manifold but also scales their traversal rates. Indeed, the relationship between arc-length displacement *ds* and time *dt* is given by $ds = \sqrt{e - f \left(x\right)} dt$*.* Allowing *e* to vary freely defines geodesics on an augmented manifold, which can be interpreted as a state-time manifold. Therefore, to describe a unique dynamical system on 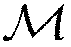 the derived Riemannian metric *ĝ* must be paired with a specific constant value of *e*. This selection determines a single family of geodesics from the multiple possible families that can be defined on 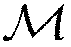 .

It should be noted that the flow *x*(*t*) of equation (2) can be seen as a reparametrization of a geodesic on the manifold ( 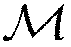 , *ω*). For this, the Hamiltonian vector field *X_{H}* is first computed using a Euclidean metric *δ*, defining a scalar field $F \left(x\right) = \frac{1}{2} {\left‖{X}_{H}\right‖}_{δ}^{2}$*. X_{H}* is then associated with the 1-form *dF* under *δ*, and thus it can also be interpreted as the gradient vector field of the potential function *F*(*x*)*.* From this, a modified Riemannian metric *ĝ* = (*e - F*(*x*))*δ* defining the geodesics of the manifold can be derived. The Hamiltonian flow *x*(*t*) corresponds to these geodesics, but with a time reparametrization function of *e*. This construction shows how Hamiltonian dynamics, defined through the symplectic form *ω*, can induce a Riemannian structure on the same manifold. By modifying the derived Riemannian metric *ĝ*, it is possible to influence or reshape the dynamics of the system, providing a geometric approach to control or manipulate its trajectories.

Contact Hamiltonian flows can also be reinterpreted as reparametrizations of geodesics associated with an induced Riemannian metric *ĝ*, derived from a potential function *F*(*x*)*.* This dual perspective highlights the dynamics both as flows ruled by the contact structure and as geodesics under the Riemannian geometry. GeometricContactFlows builds on this foundation, modeling the dynamics by harnessing the contact interpretation while generalizing it through the Riemannian perspective.

As mentioned above, relying on a single contactomorphism as in ContactMiltonianNet to map the latent dynamics to the ambient space neglects prediction uncertainty. While predictions may closely align with the training trajectories on the data manifold (i.e. the region of ambient space including the demonstrations), extrapolation in data-sparse regions of ambient space becomes unreliable, as predicting trajectories attempts to extrapolate behavior based on the training data. The extrapolated predictions are heavily influenced by neural network initialization (here in particular neural networks representing *M*(**p**), *V*(**q**), *F*(**q**) of equation (10)), leading to potential bias and inconsistency.

Therefore, GeometricContactFlows is based on defining an ensemble of contactomorphisms used to evaluate the uncertainty of dynamic predictions. This uncertainty is utilized to modify the learned dynamics, ensuring convergence to the data manifold.

To quantify prediction uncertainty and identify the boundaries of the data manifold, GeometricContactFlows use an ensemble of N (e.g. N = 5) contactomorphisms {*φ_{rⁿ}*(*T*)_{*n*∈[1*,N*]}*,* each randomly initialized and trained on the same dataset. In data-rich regions (i.e. regions of the ambient space containing a high number of demonstrations used for the training), the predictions from the ensemble closely match, reflecting consistent and reliable prediction behavior. Conversely, in regions with limited or no data, the predictions diverge, showing high prediction uncertainty due to model (i.e. neural network) initialization.

The ensemble-based uncertainty quantification in the ambient space is computed by transforming a starting point of a trajectory using the ensemble of contactomorphisms to obtain N latent space points. Then, the average of the latent space points is computed and mapped back to the ambient space and the variance of the resulting N points is computed. This can be written as ${σ}_{x} = σ {\left\{{φ}_{{r}^{n}}^{- 1}\left(T\right)\right\}}_{n ∈ \left[1, N\right]} ∘ μ {\left\{{φ}_{{r}^{n}}\left(T\right)\right\}}_{n ∈ \left[1, N\right]} \left(x\right)$ (19a)

Similarly, an uncertainty quantification can be performed in the latent space. This works as the uncertainty quantification in ambient space according to (19a) but with exchanged roles of ambient space and latent space, i.e., as formula ${σ}_{z} = σ {\left\{{φ}_{{r}^{n}}\left(T\right)\right\}}_{n ∈ \left[1, N\right]} ∘ μ {\left\{{φ}_{{r}^{n}}^{- 1}\left(T\right)\right\}}_{n ∈ \left[1, N\right]} \left(z\right)$ (19b) where *µ* represents the mean operator and *σ* denotes the variance operator. It should be noted that the contactomorphisms {*φ_{rⁿ}*(*T*)}_{*n*∈[1,*N*]} share the same latent space.

The ensemble of contactomorphisms {*φ_{rⁿ}*(*T*)}_{*n*∈[1*,N*]} can be trained as follows:
1) transform all B training trajectories into NxB latent trajectories ${\left\{{\overline{z}}_{b}^{n}\left(t\right), t∈\left[0, {t}_{b}\right]\right\}}_{b ∈ \left[1, B\right]}^{n ∈ \left[1, N\right]}$ using each contactomorphism *φ_{rⁿ}*
2) map the initial points {**x̅***_{b}*(0)}_{*b*∈[1,*B*]} to NxB points in the latent space, and determine latent predictions by integration of the latent dynamics ${\left\{{z}_{b}^{n}\left(t\right), t∈\left[0, {t}_{b}\right]\right\}}_{b ∈ \left[1, B\right]}^{n ∈ \left[1, N\right]}$
3) randomly select N inverse maps from the ensemble to compute the corresponding predicted trajectories in ambient space ${\left\{{x}_{b}^{n}\left(t\right), t∈\left[0, {t}_{b}\right]\right\}}_{b ∈ \left[1, B\right]}^{n ∈ \left[1, N\right]}$
4) compute the total (average) loss over the N contactomorphisms as ${l}_{e} = \frac{1}{N} {\sum }_{n = 1}^{N} {l}_{n}$ where ℓn is defined for each contactomorphism as in equation (15).
5) train the neural networks representing the contactomorphisms of the ensemble to reduce the loss. It should be noted that this includes, for each contactomorphisms of the ensemble, neural networks representing *M*(**p**)*, V*(**q**), *F*(**q**) of each of the contactomorphisms forming the contactomorphism (according to equation (9a)).

As the ensemble's uncertainty gives information about which regions lie inside and outside the data manifold, this information can be used to drive the dynamics so trajectories remain within or converges toward well-informed, data-rich regions.

As discussed above, the contact Hamiltonian dynamics on the latent space ( 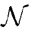 *, η'*)*,* defined by the Hamiltonian function *H_{g},* can be interpreted as reparametrized geodesics with respect to the Riemannian metric *ĝ* of equation (Jacobi metric). To guide the dynamics away from uncertain regions GeometricContactFlows reshapes the latent space metric using the ensemble uncertainty measure *σ***_{z}**. This increases the traversal cost outside the data manifold, thereby steering the latent dynamics away from data-poor regions. An approach to achieve this builds on that a dynamic optimization can be reformulated as a geodesic computation under an appropriate reparametrization. Specifically, this connects the geodesic interpretation of dynamics with the Maupertuis' principle of least action in physics, where the equations of motion of a dynamical system are derived by extremizing a cost functional over time.

In the present context this equivalence can be expressed as follows ${min}_{z , \dot{z}} {\int }_{{t}_{0}}^{{t}_{1}} L \left(z\left(t\right),\dot{z}\left(t\right)\right) dt = {min}_{\dot{z}} {\int }_{{s}_{0}}^{{s}_{1}} \sqrt{\hat{g} \left(\dot{z}\left(s\right),\dot{z}\left(s\right)\right)} ds ,$ (20) where 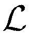 the Lagrangian function, which is the cost functional associated with the Maupertuis' principle, and $\sqrt{\hat{g} \left(\dot{z}\left(s\right),\dot{z}\left(s\right)\right)}$ to its reparametrization in terms of the arc-length *s*. In general, the geometric structure induced by this formulation is not necessarily a symmetric function of the elements of the tangent bundle **ż**. Therefore, it may not always correspond to a Riemannian structure but could instead define a more general Finsler structure. Moreover, the resultant geometric structure is a function of the additional variable *e*, which can be fixed as a constant parameter to uniquely define a specific set of geodesics on the manifold.

To modify the latent Riemannian metric, the optimization problem is redefined by introducing a control term u to drive the system away from high-uncertainty regions, $\begin{matrix}{min}_{u \left(⋅\right)} {\int }_{{t}_{0}}^{{t}_{1}} \left({σ}_{z}^{2}\left(z\left(t\right)\right)+{\left‖u\left(t\right)\right‖}^{2}\right) dt \\ s . t \dot{z} \left(t\right) = {Z}_{{H}_{g}} \left(z\left(t\right)\right) + u \left(t\right) .\end{matrix}$ (21)

After reparametrization, this optimization can be expressed as the following geodesic computation problem, ${min}_{\dot{z}} {\int }_{{s}_{0}}^{{s}_{1}} \sqrt{\hat{g} ′ \left(\dot{z}\left(s\right),\dot{z}\left(s\right)\right)} ds$ (22) where the Finsler metric *ĝ'* generally depends on **z, ż** and *e*. In regions where the uncertainty is low (i.e., *σ***_{z}** ≈ 0), the control action vanishes (i.e., **u** ≈ 0) and the resulting latent dynamics **ż**(*t*) = *Z_{H_{g}}***(z)** are unchanged, corresponding to the original latent metric, i.e., *ĝ'* ≈ *ĝ*. Conversely, in high-uncertainty regions, the control action u modifies the dynamics by bending the latent trajectories to guide them away from the data-poor areas.

Illustratively speaking, the consideration of uncertainty can be described as follows: the Hamiltonian dynamics (unmodified, i.e. uncertainty not considered) correspond to a Riemannian metric (because they correspond to a flow according to equation (4) and the flow can be reinterpreted as reparametrization of geodesics associated with an induced Riemannian metric *ĝ*). This correspondence is defined in such a manner that following geodesics according to the Riemannian metric means following the dynamics. Now, to include uncertainty, the control term u is introduced which corresponds to modifying the Riemannian metric such that geodesics are no longer as before but tend to move through regions of low uncertainty. Illustratively speaking, this is achieved by increasing the cost of moving through regions with high uncertainty (see equation (20): a high uncertainty is punished by the objective function of the optimization). So, the geodesics have been changed and the Riemannian metric which has these changed geodesics as geodesics is the Riemannian metric *ĝ'*.

For implementation, u(t) may be set (according to a simplification) to the negative gradient of ${σ}_{z}^{2} \left(z\left(t\right)\right.$, i.e. such that it points into the direction of decreasing uncertainty in latent space.

According to one embodiment, the control action u(t) obtained from the analytical solution of the optimal control problem: ${min}_{u} {\int }_{0}^{T} \left[{σ}^{2}\left(z\right)+{\left‖u\right‖}^{2}\right] dt , s . t . \dot{z} = {Z}_{{H}_{g}} \left(z\right) + u .$ is actually more complicated: ${u}^{∗} \left(t\right) = - {\int }_{0}^{t} \left[σ\left(z\right)\frac{\partial σ}{\partial z}+{\left(∇{Z}_{{H}_{g}}\right)}^{⊤}u\right] ds .$

This gradient may be determined from the uncertainties at points around the current point in latent space, which may be determined according to equation (19b). Then, the dynamic equation **ż**(*t*) *= Z_{H_{g}}*(**z**(*t*)) *+* **u**(t) is integrated to, in the end, follow the modified dynamics corresponding to the modified Riemannian metric *ĝ'* and thus generate a predicted trajectory in latent space. The term *Z_{H_{g}}*(*.*) (which can be seen as "free dynamics" in the sense of control theory, while u(t) can be seen as control term) gives the direction according to the unmodified dynamics, see equation (5) for examples.

The cost ${\int }_{{t}_{0}}^{{t}_{1}} \left({σ}_{z}^{2}\left(z\left(t\right)\right)+{\left‖u\left(t\right)\right‖}^{2}\right) dt$ is implicitly considered by adopting the control action ${u}^{∗} \left(t\right) = - {\int }_{0}^{t} \left[σ\left(z\right)\frac{\partial σ}{\partial z}+{\left(∇{Z}_{{H}_{g}}\right)}^{⊤}u\right] ds .$

The cost functional of the optimization problem (21) can be extended by incorporating other types of energy functions aimed at penalizing the crossing of unsafe regions. For example, consider learning a contact Hamiltonian dynamics for a controlled physical system. In this setting, an unsafe region can be described by obstacles in the workspace of the system. Formally, an obstacle in the ambient space ( 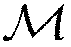 *, η*) can be represented as a distribution of points **x***ₒ* = {**q***ₒ*, **p***ₒ*, *sₒ*} ~ Υₓ. Here, **q***ₒ* ∈ 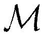 is sampled from the spatial distribution of points occupied by the obstacle, while ${p}_{o} ∈ {ℝ}^{n}$ and ${s}_{o} ∈ ℝ$ are sampled from distributions encoding the feasible ranges for momentum and action variables. These distributions indicate that the obstacle at **q***ₒ* cannot be crossed with any combination of p and *s*. The points **x***ₒ* ∈ ( 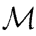 *, η*) are mapped to the latent space ( 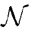 *,η'*) via the ensemble, as follows ${ϒ}_{z} = {\left\{{φ}_{{r}^{n}}\left(T\right)\left({x}_{o}\right)\left|{x}_{o}∼{ϒ}_{x}\right.\right\}}_{n ∈ \left[1, N\right]}$ (23)

This leads a distribution of energy in the latent space which is incorporated into the optimal control problem as a penalty term to enforce obstacle avoidance.

The resulting optimal control problem is then, $\begin{matrix}{min}_{u \left(⋅\right)} {\int }_{{t}_{0}}^{{t}_{1}} \left({E}_{ϒ}\left(z\left(t\right)\right)+{σ}_{z}^{2}\left(z\left(t\right)\right)+{\left‖u\left(t\right)\right‖}^{2}\right) dt \\ s . t . \dot{z} \left(t\right) = {Z}_{{H}_{g}} \left(z\left(t\right)\right) + u \left(t\right) ,\end{matrix}$ (24) where *E*_{Υ}(***z***(*t*)) denotes the energy term associated with the unsafe region, i.e., the latent space obstacle distribution. This formulation ensures that unsafe latent space regions are associated with high energy values, effectively penalizing trajectories that intend crossing these regions, resulting in obstacle avoidance behavior, for example.

The implementation is done similarly to the case without obstacle avoidance, i.e. by integrating ż(*t*) *= Z_{H_{g}}*(**z**(*t*)) *+* **u**(t). In this case, however, u(t) is set to the negative gradient of ${E}_{ϒ} \left(z\left(t\right)\right) + {σ}_{z}^{2} \left(z\left(t\right)\right.$*.*

In this case the control action is ${u}^{∗} \left(t\right) = - {\int }_{0}^{t} \left[{σ}_{z}\left(z\right)\frac{\partial {σ}_{z}}{\partial z}+\frac{1}{2}\frac{\partial {E}_{ϒ}}{\partial z}+{\left(∇{Z}_{{H}_{g}}\right)}^{⊤}u\right] ds .$

The function *E*_{Υ}(**z**(*t*) represents the density of latent samples from distribution Υ***_{z}*** = {*φ_{rⁿ}*(*T*)(***x**ₒ*) | **x***ₒ* ~ Υₓ}_{n∈[1,*N*]} in the region around the latent point z. An high energy indicates a lot of points in the neighborhood of z, symptom of the probable presence of the obstacle.

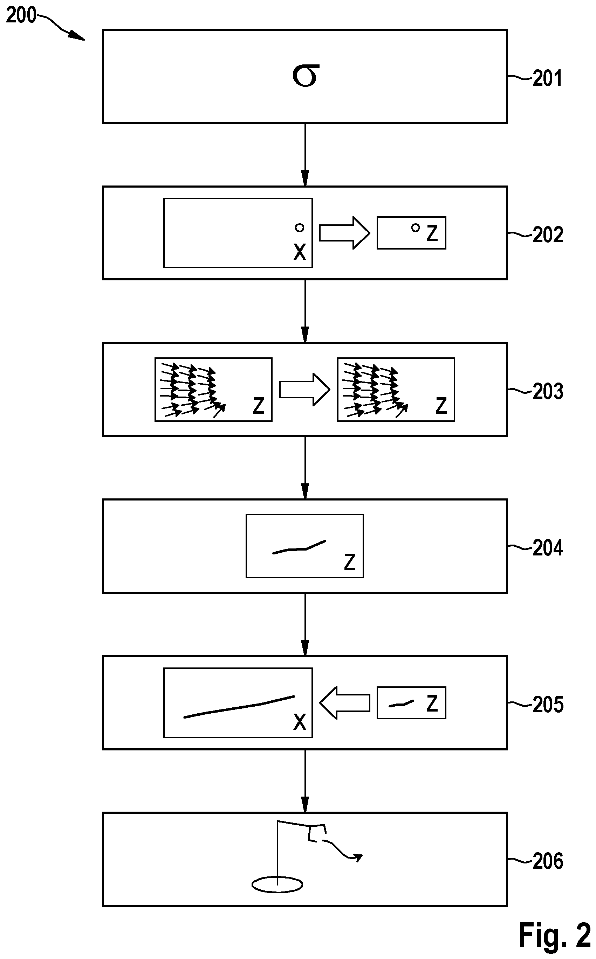

In summary, according to various embodiments, method as illustrated in figure 2 is provided.

Figure 2 shows a flow diagram 200 illustrating a method for controlling a technical system.

In 201, an uncertainty of a mapping between an ambient space, in which states of the technical system are given, and a latent space of encodings of states of the technical system is determined. Contact Hamiltonian dynamics are predetermined for the latent space and the mapping is given by at least one contactomorphism. The contactomorphism may be trained from demonstrations. The demonstrations can, but do not necessarily have to be, performed by a user. They may also be observations of a technical system that is not actively controlled, i.e. which demonstrates the dynamics that it follows by itself.

In 202, a current state of the technical system, given in the ambient space, is encoded to an encoded state of the technical system in the latent space using the mapping.

In 203, the predetermined contact Hamiltonian dynamics are adapted to prioritize regions of the latent space where the uncertainty of the mapping is lower over regions of the latent space where the uncertainty of the mapping is higher.

In 204, a latent space trajectory for the technical system is determined according to the adapted contact Hamiltonian dynamics in the latent space.

In 205, the determined latent space trajectory is decoded to a trajectory for the technical system in ambient space according to an inverse of the mapping.

In 206, the technical system is controlled to at least partially follow the determined trajectory for the technical system in ambient space.

It should be noted that the steps do not necessarily have to be performed in the order as shown in figure 2. In particular, the uncertainty may also be determined after encoding the current state or the predetermined contact Hamiltonian dynamics may be adapted before encoding the current state. For example, in inference, the ambient space point is first encoded into the latent space and then the latent variance is computed.

The approach of figure 2 can be used to compute a control signal for controlling a technical system, in particular a robot device like e.g. a computer-controlled machine, like a robot, a vehicle, a domestic appliance, a power tool, a manufacturing machine, a personal assistant or an access control system. The approach may also be applied to other technical systems such as thermodynamic processes and quantum mechanical systems, e.g. for manufacturing processes. The states may accordingly be poses (position, orientation and related velocities) but may also be or include other domain-specific state information such as temperatures, pressures, energies, quantum phases, etc. According to various embodiments, a policy for controlling the technical system may be learnt and then the technical system may be operated accordingly.

Depending on the states, various embodiments may receive and use various kinds of sensor data like temperature, force, joint position and image data (i.e. digital images) from various sensors, in particular visual sensors (cameras) such as video, radar, LiDAR, ultrasonic, thermal imaging, motion, sonar etc.

The method of Figure 2 may be performed by one or more data processing devices (e.g. computers or microcontrollers) having one or more data processing units. The term "data processing unit" may be understood to mean any type of entity that enables the processing of data or signals. For example, the data or signals may be handled according to at least one (i.e., one or more than one) specific function performed by the data processing unit. A data processing unit may include or be formed from an analog circuit, a digital circuit, a logic circuit, a microprocessor, a microcontroller, a central processing unit (CPU), a graphics processing unit (GPU), a digital signal processor (DSP), a field programmable gate array (FPGA), or any combination thereof. Any other means for implementing the respective functions described in more detail herein may also be understood to include a data processing unit or logic circuitry. One or more of the method steps described in more detail herein may be performed (e.g., implemented) by a data processing unit through one or more specific functions performed by the data processing unit.

Accordingly, according to one embodiment, the method is computer-implemented.

## Claims

1. A method for controlling a technical system (101), comprising:
determining (201) an uncertainty of a mapping between an ambient space, in which states of the technical system (101) are given, and a latent space of encodings of states of the technical system, wherein contact Hamiltonian dynamics are predetermined for the latent space and wherein the mapping is given by at least one contactomorphism;
encoding (202) a current state of the technical system (101), given in the ambient space, to an encoded state of the technical system (101) in the latent space using the mapping;
adapting (203) the predetermined contact Hamiltonian dynamics to prioritize regions of the latent space where the uncertainty of the mapping is lower over regions of the latent space where the uncertainty of the mapping is higher;
determining (204) a latent space trajectory for the technical system (101) according to the adapted contact Hamiltonian dynamics in the latent space;
decoding (205) the determined latent space trajectory to a trajectory for the technical system (101) in ambient space according to an inverse of the mapping; and
controlling (206) the technical system (101) to at least partially follow the determined trajectory for the technical system (101) in ambient space.

2. The method of claim 1, comprising training each contactomorphism of an ensemble of contactomorphisms to map states of the ambient space to the latent space and determining the uncertainty from differences between encoding and/or decoding results of the contactomorphisms.

3. The method of claim 2, comprising determining the uncertainty at a latent space point by decoding the latent space point to ambient space by, for each contactomorphism of the ensemble, an inverse of the contactomorphism, determining an average ambient space point by averaging the ambient space points resulting from the decoding of the latent space point by the inverses, encoding the average ambient space point to a respective encoded average space point by each of the contactomorphisms and determining a variance of the encoded average space points as the uncertainty.

4. The method of claim 2 or 3, wherein the mapping is one of the contactomorphisms of the ensemble of contactomorphisms.

5. The method of any one of claims 1 to 4, wherein the contact Hamiltonian dynamics are adapted by adding a control term to free dynamics, given by the contact Hamiltonian dynamics, wherein the control term points into a direction of decreasing uncertainty of the mapping in latent space.

6. The method of any one of claims 1 to 5, wherein the predetermined contact Hamiltonian dynamics are further adapted to avoid regions of the latent space containing encodings of points of unsafe regions in ambient space.

7. The method of claim 6, wherein the contact Hamiltonian dynamics are adapted by adding a control term to free dynamics, given by the contact Hamiltonian dynamics, wherein the control term points into a direction of decreasing a term which includes the uncertainty of the mapping in latent space and which includes a penalty term which increases when approaching an unsafe region.

8. The method of any one of claims 1 to 7, comprising training the mapping by:
providing demonstrations of dynamics of the technical system (101),
wherein each demonstration demonstrates dynamics of the technical system (101) by indicating a trajectory (i.e. sequence of states) of the technical system (101) in an ambient space;
for each demonstration,
encoding a starting state of the demonstration to an encoded starting state in a latent space by the mapping;
determining a latent space trajectory starting at the encoded starting state according to the predetermined contact Hamiltonian dynamics in the latent space;
decoding the latent space trajectory to a predicted ambient space trajectory according to an inverse of the mapping; and determining a loss for the demonstration including a prediction loss between the predicted ambient space trajectory and the trajectory indicated by the demonstration; and
training the mapping to reduce a total loss including the losses determined for at least some of the demonstrations.

9. The method of claim 8, wherein the mapping is represented by at least one neural network (112) and training the mapping to reduce the total loss comprises training the at least one neural network (112) to reduce the total loss.

10. The method of any one of claims 1 to 9, wherein the predetermined contact Hamiltonian dynamics in latent space are harmonic oscillator dynamics.

11. The method of any one of claims 1 to 9, wherein the predetermined contact Hamiltonian dynamics in latent space are harmonic oscillator dynamics with an additive damping term in the energy function.

12. The method of any one of claims 1 to 9, wherein the predetermined contact Hamiltonian dynamics in latent space are harmonic oscillator dynamics with a damping factor in the energy functions.

13. A controller (106), configured to perform a method of any one of claims 1 to 12.

14. A computer program comprising instructions which, when executed by a computer, makes the computer perform a method according to any one of claims 1 to 12.

15. A computer-readable medium comprising instructions which, when executed by a computer, makes the computer perform a method according to any one of claims 1 to 12.
